# EUROPÄISCHE PATENTANMELDUNG

(11) **EP 1 632 615 A1**
(43) Veröffentlichungstag der Anmeldung: **08.03.2006**
(21) Anmeldenummer: 05017473.9
(22) Anmeldetag: 11.08.2005
(51) Int. Cl.: E03B 7/12, A01K 7/02, A01K 7/06

(54) **Anschluss eines Tränkebeckens**

(30) Priorität: 02.09.2004 DE 202004013679 U
(71) Anmelder: Suevia Haiges Gmbh, 74366 Kirchheim/Neckar (DE)
(72) Erfinder: Haiges, Frank, 74366 Kirchheim/Neckar (DE)
(74) Vertreter: Wolff, Michael

(57) **Zusammenfassung**

Um einen Anschluss eines Tränkebeckens mit Auslaufventil mittels einer Stichleitung an eine unterbrochene Wasserleitung, in die ein T-Stück eingefügt ist, an dem die Stichleitung ansetzt, so umzurüsten, dass auf einfache Weise die Gefahr des Einfrierens der Stichleitung beseitigt wird, wird erfindungsgemäß zwischen den fluchtenden Stutzen(14 und 16) des T-Stücks eine erste Trennwand(22) angeordnet, die den Querstutzen(10) durchsetzt und in zwei Hohlräume(26 und 28) teilt; und in der Stichleitung eine zweite Trennwand angeordnet, welche die Stichleitung in zwei Hohlräume teilt, die mit den Hohlräumen(26 und 28) des Querstutzens paarweise kommunizieren, wobei die zweite Trennwand am Tränkebecken endet unter Belassung einer den Wasserstrom wendenden Verbindung zwischen den beiden Hohlräumen der Stichleitung (Fig. 4).

## Beschreibung

Die Erfindung betrifft den Anschluss eines Tränkebeckens mit Auslaufventil mittels einer Stichleitung an eine unterbrochene Wasserleitung, in die ein T-Stück eingefügt ist, an dem die Stichleitung ansetzt, die im Allgemeinen vertikal verläuft und meist von oben her das Beckenventil erreicht.

Bei solchen Anschlüssen, die sich-bei Offenstallungen im Freien befinden, besteht im Winter die Gefahr des Einfrierens der Stichleitung, sodass bei Ventilöffnung kein Trinkwasser in das Becken fließen kann. Deshalb gibt es Anschlüsse von Tränkebecken mit Auslaufventilen an einer Ring-Wasserleitung, in der das Trinkwasser dank seiner Umwälzung auch bei Minusgraden der Lufttemperatur nicht gefriert.

Daher liegt der Erfindung die **Aufgabe** zugrunde, einen Anschluss der eingangs genannten Art so umzurüsten, dass auf einfache Weise die Gefahr des Einfrierens der Stichleitung beseitigt wird.

Diese Aufgabe ist erfindungsgemäß durch die kennzeichnenden Merkmale des Anspruches 1 **gelöst.** Dank der zwei Trennwände und der dadurch geschaffenen kommunizierenden Hohlräume durchfließt das von der Wasserleitung zum T-Stück hin und von diesem weg strömende Trinkwasser die Stichleitung, erst in einer Richtung und nach dem Wenden des Wasserflusses in umgekehrter Richtung, sodass das Auslaufventil am Becken dessen ggf. erhöhte Temperatur annimmt, die über dem Gefrierpunkt liegt. Folglich läuft jederzeit Trinkwasser aus dem geöffneten Ventil ins Becken.

Bevorzugte Ausführungsformen des erfindungsgemäßen Anschlusses sind in den Unteransprüchen (**2** bis **4**) charakterisiert: die Ausgestaltung der Trennwände gemäß Anspruch 2 schafft eine einfache und sichere Verbindung beider. Die Wendelung der Trennwand in der Stichleitung gemäß Anspruch 3 sorgt für eine gleichmäßige allmähliche Durchströmung derselben.

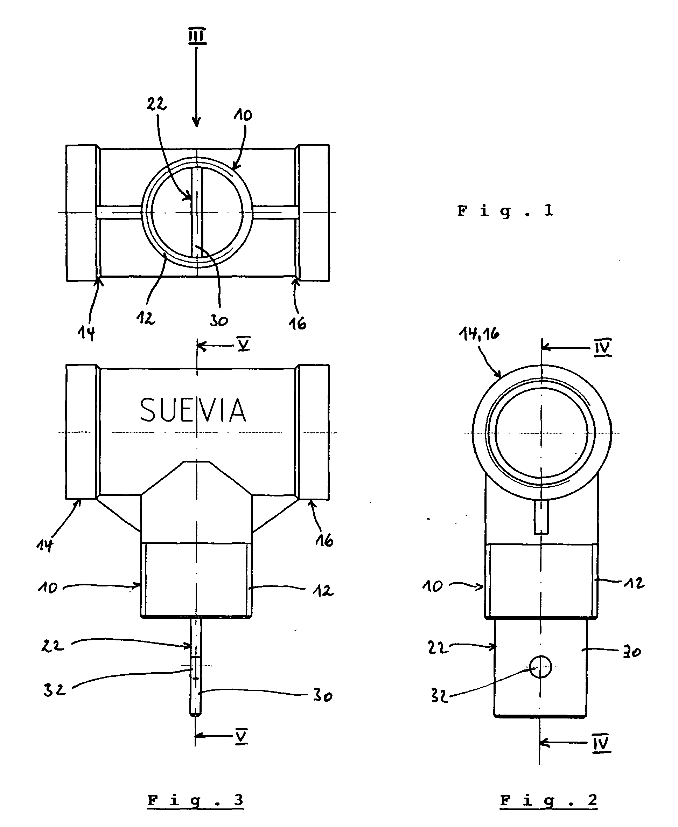

Im Folgenden ist die Erfindung anhand einer durch die beigefügte Zeichnung beispielhaft dargestellten Ausführungsform des erfindungsgemäßen Anschlusses im Einzelnen erläutert, soweit dies erforderlich erscheint. Es zeigt
- Fig. 1: eine Ansicht des T-Stückes der Ausführungsform von unten oder oben

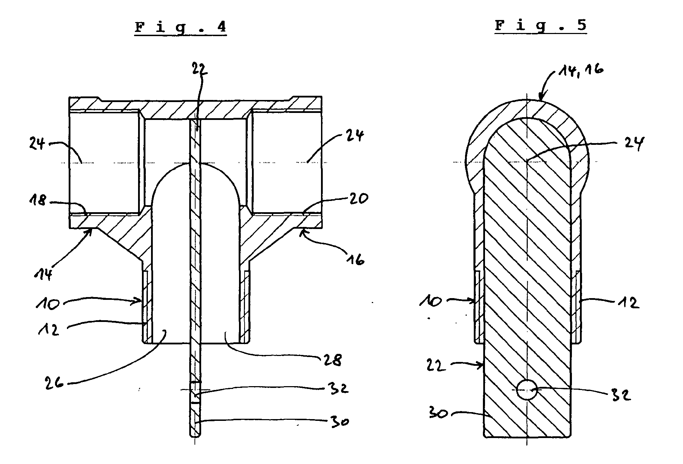

- Fig. 2: eine Stirnansicht des T-Stückes in Richtung des Pfeils II in Fig. 3
- Fig. 3: eine Vorder- oder Rückansicht des T-Stückes in Richtung des Pfeiles III in Fig. 1
- Fig. 4: einen Längsschnitt durch das T-Stück nach der Linie IV-IV in Fig. 2

und
- Fig. 5: einen Querschnitt durch das T-Stück nach der Linie V-V in Fig. 3

Im Ausführungsbeispiel, von dem nur das T-Stück des erfindungsgemäßen Anschlusses eines nicht gezeigten Tränkebeckens mit Auslaufventil mittels einer nicht gezeigten rohrförmigen Stichleitung an eine nicht gezeigte unterbrochene rohrförmige Wasserleitung, in die das T-Stück eingefügt ist, an dem die Stichleitung ansetzt, dargestellt wird, hat man sich diesen Ansatz so vorzustellen, dass das freie Ende des Querstutzens 10 des T-Stückes mit einem Außengewinde 12 versehen ist, mit dem das angesetzte Ende der Stichleitung entweder mittels eines Innengewindes derselben, oder mittels eines Außengewindes derselben und einer Muffe mit durchgehendem Innengewinde verschraubt ist.

Eine Muffenverbindung hat den Vorteil, dass sie den Durchflussquerschnitt der Abzweigung von der Wasserleitung in die Stichleitung nicht verändert.

Die zwei fluchtenden Stutzen 14 und 16 des T-Stückes weisen Innengewinde 18 bzw. 20 auf, in welche die mit Außengewinden versehenen zwei Enden der Unterbrechung der Wasserleitung eingeschraubt zu denken sind.

In der Mitte des T-Stückes ist eine ebene dünne Trennwand 22 wasserdicht an den Wandungen des T-Stückes befestigt, auf welcher die gemeinsame Achse 24 der fluchtenden Stutzen 14 und 16 senkrecht steht und welche(22) den Querstutzen 12 in zwei spiegelbildliche Hohlräume 26 und 28 teilt. Diese Trennwand 22 ragt freitragend aus dem Querstutzen 10 heraus und in ihrem Überstand 30 ist ein Befestigungsloch 32, das der Schraubverbindung mit einem den Überstand 30 überlappenden ebenen Endabschnitt einer nicht gezeigten Trennwand in der Stichleitung dient, die dadurch ebenfalls in zwei Hohlräume unterteilt ist. Diese Trennwand in der Stichleitung kann eben oder gewendelt sein.

## Patentansprüche

1. Anschluss eines Tränkebeckens mit Auslaufventil mittels einer Stichleitung an eine unterbrochene Wasserleitung, in die ein T-Stück eingefügt ist, an dem die Stichleitung ansetzt, **dadurch gekennzeichnet, dass** zwischen den fluchtenden Stutzen(14 und 16) des T-Stücks eine erste Trennwand(22) angeordnet ist, die den Querstutzen(10) durchsetzt und in zwei Hohlräume(26 und 28) teilt; und dass in der Stichleitung eine zweite Trennwand angeordnet ist, welche die Stichleitung in zwei Hohlräume teilt, die mit den Hohlräumen(26 und 28) des Querstutzens paarweise kommunizieren, wobei die zweite Trennwand am Tränkebecken endet unter Belassung einer den Wasserstrom wendenden Verbindung zwischen den beiden Hohlräumen der Stichleitung.

2. Anschluss nach Anspruch 1, **dadurch gekennzeichnet, dass** die ebene Trennwand(22) im T-Stück aus dem Querstutzen(10) herausragt und ihr Überstand(30) ein Loch(32) zur Befestigung eines überlappenden ebenen Endabschnittes der Trennwand in der Stichleitung aufweist.

3. Anschluss nach Anspruch 1 oder 2, **dadurch gekennzeichnet, dass** die Trennwand in der Stichleitung gewendelt ist.

4. Anschluss nach einem der Ansprüche 1 bis 3, **dadurch gekennzeichnet, dass** der Querstutzen(10) ein Außengewinde(12) aufweist.
